# EUROPÄISCHE PATENTANMELDUNG

(11) **EP 1 450 322 A1**
(43) Veröffentlichungstag der Anmeldung: **25.08.2004**
(21) Anmeldenummer: 03100434.4
(22) Anmeldetag: 21.02.2003
(51) Int. Cl.: G07F 19/00

(54) **Zahlungssystem und Zahlungsverfahren**

(71) Anmelder: Swisscom Mobile AG, 3050 Bern (CH)
(72) Erfinder: Cantini, Renato, 1782, Belfaux (CH); Busch Lauper, Karin, 3014, Bern (CH)
(74) Vertreter: Saam, Christophe

(57) **Zusammenfassung**

Zahlungsverfahren zwischen einem Mobilteilnehmer (1) und einem Anbieter (2) ,
wobei der Mobilteilnehmer über ein erstes tragbares persönliches Identifizierungsmodul (10) verfügt, das zur Identifizierung in einem Mobilfunknetz (3) bestimmt ist,
wobei das benannte Identifizierungsmodul an mindestens ein Geldkonto (100) gebunden ist,
wobei mindestens ein benanntes Geldkonto eine Ausgabenlimite hat,
wobei eine Zahlungstransaktion, für die die benannte Ausgabenlimite nicht ausreicht mittels eines zweiten angegliederten Geldkontos, das an ein zweites Identifizierungsmodul gebunden ist, erfolgt.

## Beschreibung

Die vorliegende Erfindung betrifft ein Zahlungssystem und ein Zahlungsverfahren um Zahlungen mit einer Zahlungskarte auszuführen.

Gemäss dem bisherigen Stand der Technik werden Zahlungstransaktionen zwischen einem Kunden (Benutzer, zum Beispiel einem Mobilteilnehmer) und einem Anbieter (beispielsweise einem Händler) oft mit einer elektronischen Zahlungskarte ausgeführt. Debit- und Kreditkarten werden zum Beispiel an Kassen in Geschäften, bei Tankstellen usw. verwendet. Die Karte umfasst meistens Speichermittel (zum Beispiel einen Magnetstreifen und/oder einen Chip) in welchen unter anderem die Identifizierung des Kunden gespeichert ist. Um eine Transaktion zu tätigen (zum Beispiel um in einem Geschäft einen Artikel zu bezahlen) muss der Benutzer seine Karte beim Händler in einen geeigneten Kartenleser einschieben. Das Terminal liest dann die Identifizierung des Geldkontos (zum Beispiel die PAN, Primary Account Number) in der Karte, ermittelt und zeigt den zu bezahlenden Betrag an, prüft gegebenenfalls die Solvenz des Benutzers und fordert vom Benutzer, dass er die Transaktion mit einer Bestätigungstaste auf dem Händler-Terminal bestätigt. Wenn der Kunde solvent ist und seine Bestätigung eingegeben hat, werden die Geldkontoinhaber-Identifizierung, der zu bezahlende Betrag und evtl. auch eine Terminal-Identifizierung an einen durch ein Telekommunikationsnetz mit dem Terminal verbundenen Finanzserver übermittelt. Entsprechend wird das Konto des Benutzers bei diesem Zahlungsdienstanbieterserver sofort oder später belastet.

Anbieter verfügen immer öfter über "virtuelle Terminals" (zum Beispiel Software-Komponenten), die für Zahlungstransaktionen mit einer Geldkarte miteinander kooperieren. In der nachfolgenden Beschreibung wird deshalb von Anbieter-Zahlungsmodul gesprochen, wobei das Modul entweder ein physisches Terminal sein kann oder eine Software-Anwendung.

Man unterscheidet bei kartenbasierten Zahlungssystemen zwischen Wertkarten (oder elektronisches Geld), Kreditkarten und Debitkarten. Bei Wertkarten weist die Zahlungskarte meist einen Speicherbereich auf, in welchen (in der Regel zuvor) ein Geldbetrag geladen wurde (Prepaid). Der Geldbetrag kann aus Sicherheitsgründen oft auch in einem Fernserver gespeichert werden; in diesem Fall kann die Wertkarte nur eine Identifizierung des entsprechenden Kontos in diesem Server umfassen. Bei Kreditkarten ist die Karte an ein Konto des Benutzers bei einem Finanzinstitut gebunden, wobei dieses Konto erst nach der Transaktion belastet wird (pay later). Bei Debitkarten hingegen muss das gebundene Konto beim Finanzinstitut im voraus geladen werden und wird während oder unmittelbar nach der Transaktion belastet (pay now).

Nachteilig in diesen Verfahren ist die Notwendigkeit, die Karte des Benutzers in ein fremdes Gerät einschieben zu müssen. Die Benutzer haben normalerweise ihre Karte nicht zur Hand, sondern zum Beispiel im Portemonnaie; eine sehr schnelle Transaktion ist also nicht möglich.

Diese Karten enthalten eine Geldkontoinhaber-Identifizierung, die indes nur erlaubt, die Benutzer beim Zahlungsdienstanbieter identifizieren zu lassen. Eine Karte kann also normalerweise nur dann für eine finanzielle Transaktion benutzt werden, wenn der Benutzer und der Anbieter beim gleichen Zahlungsdienstanbieter affiliiert sind. Dagegen ist der Gebrauch der Karte nicht für andere Arten von Transaktionen (zum Beispiel für nicht-finanzielle Transaktionen) vorgesehen. Für den Benutzer ist es also unumgänglich, stets eine grosse Anzahl von Karten für jegliche Arten von finanziellen oder nicht-finanziellen Transaktionen zu besitzen, zum Beispiel mehrere Wert-, Debit- oder Kreditkarten, die von verschiedenen Finanzinstituten oder Ladenketten verwaltet werden, oder Abonnementskarten oder Zugangskarten für geschützte Zonen. Diese Karten sind meistens durch verschiedene Pin-Codes geschützt, die sich der Benutzer mühsam einprägen muss. Ausserdem müssen sowohl Benutzer als auch Händler verschiedene Konten verwalten, das heisst für jedes Konto die allgemeinen Geschäftsbedingungen studieren, Prepaid und Wertkonten im voraus nachladen, Kontoauszüge prüfen, usw.

Um diese Probleme zu vermeiden, wurde unter anderem in der Patentanmeldung W098/37524 vorgeschlagen, die SIM-Karte(Subscriber Identity Module) zur Identifizierung des Benutzers in einem Mobilfunksystem als elektronische Zahlungskarte zu verwenden. Zur Übertragung der Transaktionsdaten wird eine kontaktlose Verbindung (zum Beispiel eine infrarote Verbindung) zwischen dem Benutzermobilgerät und dem Anbieterterminal aufgebaut. Dadurch erübrigt sich für den Benutzer die Notwendigkeit, eine elektronische Karte aus dem Portemonnaie zu ziehen und in ein fremdes Gerät einzuschieben.

Es sind beim bisherigen Stand der Technik auch Zahlungsverfahren bekannt, bei welchen Transaktionsdaten zwischen dem Benutzermobilgerät und einem Händlerterminal nicht direkt, sondern über eine Zahlungsplattform im Mobilfunknetz übertragen werden. Dabei werden Belege oder eine Referenz zur Transaktion oft über SMS (Short-Message Service) oder USSD (Unstructured Supplementary Service Data) übertragen. Diese Lösungen haben den Vorteil, dass keine umständliche und sicherheitskritische direkte Verbindung zwischen Mobilgerät und Terminal aufgebaut werden muss. Ausserdem erlauben Sie auch Transaktionen zwischen Benutzer und Anbieter, die sich nicht in unmittelbarer Nähe voneinander befinden.

Es sind beim bisherigen Stand der Technik auch Zahlungsverfahren bekannt, bei welchen eine einzige Zahlungskarte mit mehreren Geldkonten verbunden ist. Dadurch erübrigt sich für den Benutzer die Notwendigkeit, mehrere Zahlungskarten bei sich zu haben.

Wird eine solche an mehrere Konten gebundene Karte mit einem (oft ebenfalls an mehrere Konten gebundenen) Terminal verwendet, muss der Benutzer bestimmen, welches Geldkonto für die Transaktion verwendet werden muss. Ist beispielsweise eine Karte an ein Prepaid-Wertkonto und an mehrere Kredit- und/oder Debit-Kartenkonten gebunden, kann der Benutzer meist in einem Menu im Händlerterminal entscheiden, welches Geldkonto belastet werden soll. Dabei kann er verschiedene Parameter berücksichtigen, beispielsweise die Bonität jedes Kontos, die Transaktionskosten, die Sicherheit, den Komfort usw.

Die meisten an eine Karte gebundenen Geldkonten haben eine Ausgabenlimite. Bei Geldkonten, die an Kreditkarten gebunden sind, gibt es beispielsweise fast immer einen maximalen monatlichen Ausgabebetrag. Bei Debitkarten kann auch ein periodischer Ausgabebetrag vorgesehen sein; ausserdem darf der Saldo auf den entsprechenden Geldkonten nicht negativ sein, oder nicht unter eine vorbestimmte Kreditgrenze gelangen. Bei den meisten Wertkarten muss der Saldo immer positiv sein.

Diese Ausgabenlimiten garantieren eine gewisse Sicherheit sowohl für den Benutzer als auch für die Anbieter und für die Zahlungsdienstanbieter, indem der Betrag, der mit gestohlenen, missgebrauchten oder von einem nicht solventen Benutzer verwendeten Karte riskiert wird, begrenzt wird. Sie können auch von den Benutzern festgelegt werden, um deren periodische Ausgaben oder die Ausgaben ihre Kinder oder Angestellten zu begrenzen. Allerdings begrenzen diese Ausgabenlimiten die Einsatzmöglichkeiten von Zahlungskarten. Viele Zahlungstransaktionen können wegen diesen Einschränkungen nicht realisiert werden oder müssen über einen anderen (weniger beliebten) Zahlungsdienst erfolgen. Solche Einsatzeinschränkungen sind sowohl für den Benutzer als auch für den Anbieter und für den Zahlungsdienstanbieter störend und wirtschaftsschädlich.

Es wurden Verfahren erwogen, bei welchen Wertkarten automatisch nachgeladen werden, sobald der Saldo unter eine bestimmte Schwelle sinkt. Vorausbezahlte Telefonkarten könnten somit automatisch durch Belastung eines Geldkontos bei einem Finanzinstitut nachgeladen werden. Voraussetzung ist jedoch, dass der Benutzer über ein anderes Geldkonto verfügt. Ausserdem ist dieses Verfahren nicht geeignet, um beispielsweise die an ein Kreditkarten-Geldkonto gebundene Ausgabenlimite zu überschreiten. Der Nachladeprozess ist meistens ziemlich lang und kann nicht während einer Zahlungstransaktion durchgeführt werden, ohne die gesamte Transaktion unzumutbar zu verlängern. Dieses Verfahren ist auch nicht geeignet, um die Ausgabenlimite eines Benutzers mit einer bestimmten Karte zu fixieren. Ferner wird das Geldkonto oft mit einem vorbestimmten Betrag nachgeladen, der nicht mit den effektiven Bedürfnissen übereinstimmt. Im übrigen verzichten viele Wertkarteninhaber auf die Möglichkeit, das Konto automatisch nachzuladen, da dies das Gesamtrisiko bei Verlust oder Diebstahl der Karte erheblich erhöht.

Es ist eine Aufgabe der vorliegenden Erfindung, ein neues Verfahren und ein neues System vorzuschlagen, die erlauben, die oben erwähnten Nachteile zu verhindern.

Eine andere Aufgabe ist es, ein neues Verfahren und ein neues System vorzuschlagen, mit welchen Ausgabenlimiten, die an Geldkonten gebunden sind überwunden werden können, ohne dass das Transaktionsrisiko für die verschiedenen Partner erhöht wird.

Eine andere Aufgabe ist es, ein Verfahren und ein System vorzuschlagen, die zusätzliche Dienste und nützliche Funktionen erlauben.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch ein Zahlungsverfahren zwischen einem Mobilteilnehmer und einem Anbieter,
wobei der Mobilteilnehmer über ein erstes tragbares persönliches Identifizierungsmodul verfügt, das zur Identifizierung in einem Mobilfunknetz bestimmt ist,
wobei das benannte Identifizierungsmodul an mindestens ein Geldkonto gebunden ist,
wobei die Benutzung mindestens eines benannten Geldkontos eingeschränkt ist,
und wobei eine Zahlungstransaktion, für die die Benutzungseinschränkung nicht ausreicht, mittels eines zweiten angegliederten Geldkontos, das an mindestens ein zweites Identifizierungsmodul gebunden ist, erfolgt.

Diese Ziele werden auch durch ein Zahlungsverfahren zwischen einem Mobilteilnehmer und einem Anbieter erreicht, in welchem:
der Mobilteilnehmer über ein erstes tragbares persönliches Identifizierungsmodul verfügt, das zur Identifizierung in einem Mobilfunknetz bestimmt ist,
wobei das benannte Identifizierungsmodul an mindestens ein Geldkonto gebunden ist,
wobei mindestens ein benanntes Geldkonto eine Ausgabenlimite hat,
und in welchem Zahlungstransaktionen, für die die benannte Ausgabenlimite nicht ausreicht mittels eines zweiten angegliederten Geldkontos, das an mindestens ein zweites Identifizierungsmodul gebunden ist, erfolgt.

Dies hat den Vorteil, dass Benutzungseinschränkungen, zum Beispiel Ausgabenlimiten, mit der Garantie oder Bewilligung eines anderen Mobilteilnehmers überschritten werden können. Durch Angliederung von mehreren Geldkonten, die an verschiedene Identifizierungsmodule gebunden werden können, werden Zahlungstransaktionen ermöglicht, ohne dadurch das Transaktionsrisiko für die unterschiedlichen Partner zu erhöhen.

Dies hat auch für den Benutzer den Vorteil, dass wenn mehrere Gelkonten an sein Identifizierungsmodul gebunden sind, mehrere Zahlungskarten für mehrere Zahlungsdienste (zum Beispiel Kredit-, Debitoder Wert-Zahlungsdienst) ersetzt werden. Dadurch kann die Anzahl von Karten, die mitgeführt werden müssen, erheblich reduziert werden und die Akzeptanz für eine Affiliation an neue Geldkonten wird erhöht, wenn diese keine zusätzliche Karte erfordert. Für die Zahlungsdienstanbieter hat diese Lösung den Vorteil, dass sie keine aufwendigen Zahlungskarten herstellen, verteilen und verwalten müssen.

In einer Ausführungsform werden Geldbeträge aus dem zweiten Geldkonto, das an mindestens das zweite Identifizierungsmodul gebunden ist, überwiesen werden, wenn die Ausgabenlimite für eine gewisse Zahlungstransaktion nicht ausreicht.

Dies hat den Vorteil, dass Geldbeträge erst bei Bedarf (wenn der Betrag für eine bestimmte Zahlungstransaktion benötigt wird) überwiesen werden. Auf diese Weise können kleinere Ausgabenlimiten gesetzt werden, um die Sicherheit der Karte zu erhöhen, ohne die Einsatzmöglichkeiten der Karte zu begrenzen.

Dies hat weiter den Vorteil, dass die benötigten Geldbeträge aus einem Geldkonto, das an ein anderes Identifizierungsmodul gebunden ist, überwiesen werden. Das andere Identifizierungsmodul kann einem anderen Inhaber gehören. Dies hat den Vorteil, dass der Benutzer des nachzuladenden Geldkontos selbst kein anderes Geldkonto braucht, sondern Geldbeträge ab dem Geldkonto eines anderen angegliederten Benutzers bei Bedarf für seine Transaktionen ausgeben kann.

In einer anderen Ausführungsform wird die Ausgabenlimite, die einem Geldkonto eines Mobilteilnehmers gesetzt ist, erhöht, wenn ein anderer Mobilteilnehmer dies zulässt und/oder selbst eine Garantie für diese Erhöhung vorweist. Dies hat den Vorteil, dass Ausgabenlimiten dynamisch und bei Bedarf von anderen Mobilteilnehmern angepasst werden können. Auf diese Weise können beispielsweise Eltern ihren Kindern eine periodische Ausgabenlimite setzen, die dann bei Bedarf (für gewisse Transaktionen und mit der Zustimmung der Eltern) überschritten werden kann.

In einer bevorzugten Variante wird eine Überschreitungsanfragemeldung an den Inhaber des zweiten Geldkontos gesendet, bevor die Zahlungstransaktion durchgeführt wird, beispielsweise bevor Geldbeträge aus diesem anderen Geldkonto überwiesen werden. Diese Überschreitungsanfragemeldung muss vom Inhaber des zweiten Geldkontos manuell oder automatisch akzeptiert werden.

Dies hat den Vorteil, dass Überschreitungen der Ausgabenlimiten durch Überweisungen aus dem Geldkonto eines anderen Mobilteilnehmers vorgängig von diesem anderen Mobilteilnehmer validiert werden.

In einer bevorzugten Ausführungsform werden Gruppen von angegliederten (möglicherweise hierarchisch organisierten Mobilteilnehmern) definiert und in einer Datenbank registriert. Wenn ein Mobilteilnehmer eine gewisse Zahlungstransaktion wegen Überschreitung einer Ausgabenlimite nicht selbst durchführen kann, kann er sich während dem Transaktionsvorgang den benötigten fehlenden Geldbetrag, oder die Bewilligung für eine Überschreitung, von einem anderen angegliederten Mitglied der Gruppe überweisen lassen. Eine Gruppe kann beispielsweise einer Familie, einem Unternehmen oder einer Organisation entsprechen; in einer Familie können beispielsweise individuelle Ausgabenlimiten für die Zahlungskarten der Kinder definiert werden, die bei Bedarf (z.B. für gewisse Zahlungstransaktionen und nur mit der expliziten oder impliziten Genehmigung von einem der Eltern) überschritten werden können.

Die Datenbank von angegliederten Mobilteilnehmern und das Modul zur Verwaltung der Ausgabenlimitenüberschreitungen, befindet sich vorzugsweise in einer Zahlungsplattform, die vorzugsweise in der Infrastruktur des Mobilfunknetzes vorhanden ist, oder die zumindest auf netzwerkinterne Parameter des Mobilfunknetzes zugreifen kann.

In einer bevorzugten Variante werden mindestens gewisse Geldkonten von der Plattform in der Infrastruktur des Mobilfunknetzes betrieben. Transaktionsdaten für Transaktionen mit mehreren Geldkonten, die eventuell von mehreren Zahlungsdienstanbietern und/oder mehreren Finanzinstituten angeboten werden, werden somit durch eine gemeinsame Plattform übertragen und in dieser Zahlungsplattform bewertet. Dies hat den Vorteil, dass ein allfälliger Betrug mit grösster Sicherheit aufgedeckt werden kann, da das Verhalten der Benutzer mit mehreren unabhängigen Geldkonten überwacht werden kann, und da dieses Verhalten mit Parametern, die nur in der Infrastruktur des Mobilfunknetzes vorhanden sind, korreliert werden kann. Diese Plattform hat ausserdem den Vorteil, dass konsolidierte Rechnungen und Kontoauszüge, welche Transaktionsdaten mit mehreren Geldkonten umfassen, für den Benutzer und/oder zu statistischen Zwecken verwendet werden können.

In einer bevorzugten Variante können Geldbeträge zwischen verschiedenen Geldkonten eines Benutzers, oder sogar zwischen verschiedenen Benutzern, vorzugsweise über die gemeinsame Plattform übertragen werden. Insbesondere wenn ein Anbieter gleichzeitig ein Mobilteilnehmer ist, können somit Peer-to-Peer Geldtransaktionen über die vom Netzwerkanbieter betriebene Zahlungsplattform durchgeführt werden. Dies erlaubt zum Beispiel, ein Prepaid-Konto bei Überschreitungen der Ausgabenlimite, auf Anforderung oder sogar automatisch (wenn vordefinierte Kriterien erfüllt sind) aus einem anderen Geldkonto vom selben oder von einem anderen Benutzer nachzuladen. Dies erlaubt auch, Geldbeträge von Personen zu Personen zu übertragen. Es können somit auch Debit- oder Kreditgrenzen für geschlossene Gruppen von Benutzern definiert werden.

Es können auch proaktive Nachladungsmittel vorgesehen werden, mit welchen Wert- und Debitkonten automatisch nachgeladen werden, wenn gewisse Kriterien erfüllt sind, beispielsweise wenn der Saldo auf einem Konto eine untere Schwelle erreicht.

Die verschiedenen Geldkonten eines Benutzers können von verschiedenen Zahlungsdienstanbietern geführt werden. Jeder Zahlungsdienstanbieter kann seine eigenen Geschäftsbedingungen für die Verwendung seines Dienstes festlegen. Das erfindungsgemässe System und Verfahren weist vorzugsweise Mittel zur Übertragung der Geschäftsbedingungen an den Benutzer auf, womit sichergestellt wird, dass diese Geschäftsbedingungen vom Benutzer gelesen wurden, sowie Mittel zur Sendung einer Bestätigung, dass diese Geschäftsbedingungen akzeptiert wurden.

Die Verfügbarkeit beziehungsweise die Sperrung eines bestimmten Geldkontos, das an eine Identifizierungskarte gebunden ist, kann abhängig von internen Parametern des Mobilfunknetzes veranlasst werden. Es ist zum Beispiel im Rahmen der Erfindung möglich, ein bestimmtes Geldkonto zu sperren, wenn sich der Benutzer ausserhalb eines vordefinierten geographischen Gebiets befindet und/oder während vordefinierten Zeitperioden.

Die vorliegende Erfindung wird mit Hilfe der als Beispiel gegebenen Beschreibung besser verständlich und durch die beiliegenden Figuren veranschaulicht:
Die Figur 1 zeigt ein Blockschema, das den Informationsfluss in einer bevorzugten Ausführungsform des Systems der Erfindung zeigt.
Die Figur 2 zeigt ein Blockschema, das mögliche Datenkanäle zwischen den verschiedenen Akteuren des Systems als Beispiel veranschaulicht.

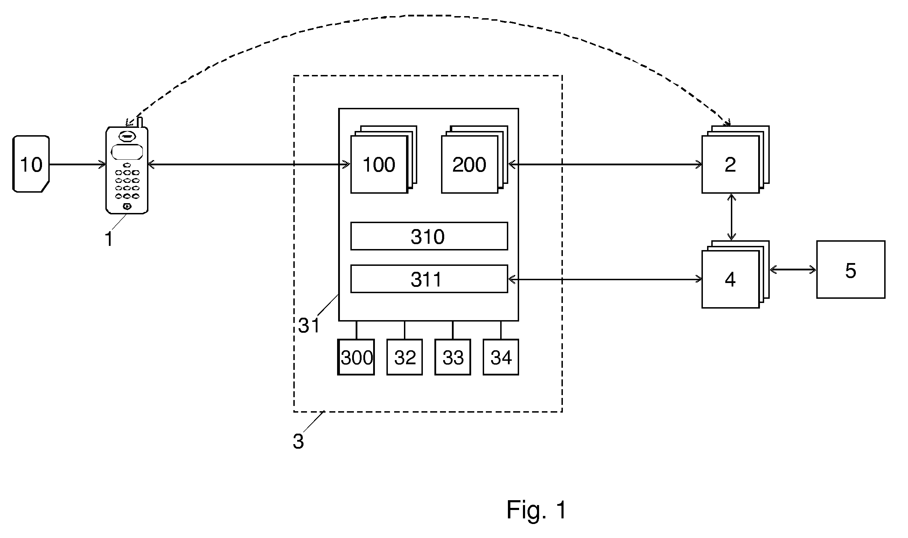

Figur 1 zeigt ein Blockschema mit den Hauptakteuren oder Komponenten des Systems. Im dargestellten Beispiel umfasst das System eine Vielzahl von Benutzern (Mobilteilnehmern), die je über ein Mobilgerät 1 verfügen. Mit "Mobilgerät" werden in diesem Kontext sowohl tragbare Geräte gemeint als auch Geräte, die an einem Fixnetz angeschlossen sind, die aber durch ein Identifizierungsmodul statt durch den Anschlusspunkt an das Netzwerk identifiziert werden.

In der Folge der Beschreibung und in den Ansprüchen wird mit dem Bezugszeichen 1 entweder der Benutzer (Kontoinhaber) oder das Mobilgerät 1 gekennzeichnet, ausser wenn ausdrücklich ein Unterschied gemacht wird. Die Mobilgeräte umfassen ein Identifizierungsmodul 10 zur Identifizierung des Benutzers in einem Mobilfunknetz. Das Identifizierungsmodul 10 ist vorzugsweise persönlich, tragbar, und kann vom Mobilgerät getrennt werden; es ist vorzugsweise eine Chipkarte. Das Mobilgerät 1 kann beispielsweise ein digitales zellulares Mobiltelefon sein (zum Beispiel ein GSM, HSCSD, GPRS, EDGE, CDMA) oder ein UMTS-Mobiltelefon, oder ein Rechner (zum Beispiel ein PDA) oder ein Laptop mit einer kontaktlosen Schnittstelle (zum Beispiel mit einer GSM, HSCSD, GPRS, EDGE, CDMA, UMTS oder WLAN-Erweiterungskarte). Als Variante könnte das Mobilgerät 1 auch ein ad-hoc Gerät sein, das Verbindungen in ein ad-hoc Netzwerk aufbauen kann. Das Identifizierungsmodul 10 ist beispielsweise eine SIM-Karte.

Das Benutzer-Mobilgerät 1 kann an die Infrastruktur 3 eines Mobilnetzwerks angeschlossen werden, um Sprach- und Datenverbindungen mit anderen Geräten aufzubauen. Mit Infrastruktur ist in dieser Beschreibung und in den Ansprüchen jener Teil eines Netzwerkes gemeint, welcher vom Betreiber des Netzwerkes verwaltet und gesteuert wird, einschliesslich die Basis-Stationen, Switches, Heimdateiregister, Verrechnungszentren, Server für zusätzliche Dienste usw. Die Infrastruktur 3 des erfindungsgemässen Systems umfasst eine Zahlungsplattform 31, die später näher beschrieben wird, zusätzliche Module 300, 32, 33, 34 sowie konventionelle Komponenten, die hier nicht beschrieben werden.

Ebenfalls an diese Infrastruktur angeschlossen sind eine Vielzahl von Anbietern 2, die den Benutzern 1 gegen Bezahlung Produkte, Informationen oder Dienstleistungen anbieten. Wie später erläutert, können Benutzer 1 manchmal auch Anbieter sein, während Anbieter 2 auch Produkte oder Dienstleistungen von anderen Anbietern oder Benutzern bestellen und bezahlen können, so dass die formelle Trennung zwischen Benutzern und Anbietern eher theoretisch ist. Anbieter können beispielsweise Händler (einschliesslich Online-Händler, Händler im Detailverkauf, Ticketverkäufer, Telekom-Mehrwertdienstanbieter und/oder Zahlungsautomaten) sein.

Anbieter verfügen über Anbieterzahlungsmodule, zum Beispiel POS-Terminals (Point-of-Sale) oder Zahlungsapplikationen. In der Folge der Beschreibung und in den Ansprüchen wird mit dem Bezugszeichen 2 entweder der Anbieter oder sein Anbieterterminal gekennzeichnet, ausser wenn ausdrücklich ein Unterschied gemacht wird.

Benutzer 1 und Anbieter 2 verfügen je über ein oder mehrere Geldkonten bei einem oder mehreren Finanzinstituten 5 und auf die über eine Vielzahl von Zahlungsdienstanbietern 4 zugegriffen werden kann. Zahlungsdienstanbieter sind beispielsweise Kreditkarten-Firmen, Debitkartenfirmen, Banken, Postämter und anderen Finanzinstitute, die Zahlungskarten herausgeben, einschliesslich der Mobilfunknetzbetreiber. Finanzinstitute sind zum Beispiel Banken, Posts, und andere Organisation die Geldkonten von Dritten verwalten. Jeder Zahlungsdienstanbieter 4 bietet einen oder mehrere Zahlungsdienste an, welche von Benutzern und Anbietern affiliiert werden können. Jeder Benutzer und Anbieter verfügt bei den Finanzinstituten über ein Geldkonto für jeden affiliierten Zahlungsdienst. Bei einem Kredit- oder Debitkartendienst wird das Geldkonto typischerweise beim Finanzinstitut abgelegt; bei Wertkarten hingegen befindet sich der Geldbetrag in einem Geldkonto in einer Benutzerchipkarte.

Als Sonderfall von Geldkonten, die an eine Karte 10 gebunden sind, sind Mobilfunknetz Prepaid- und Postpaid-Geldkonten zu erwähnen. Diese Geldkonten werden vor allem zur Bezahlung von Diensten des Mobilfunknetzbetreibers verwendet, unter anderem zur Bezahlung von Sprachund Datenverbindungen durch das Netz, zum Kauf von zusätzlichen Diensten, einschliesslich das Nachladen von Ringtönen, Bildern, usw.

Zahlungsdienstanbieter verwenden den Server 4, um Benutzer für eine Transaktion zu identifizieren beziehungsweise zu authentifizieren, und um Geldtransaktion zu gestatten oder zu sperren. Zahlungsdienstanbieter können ausserdem Schwarzlisten von schlechten Zahlern und unerwünschten Benutzern aufbauen. Clearing-Operationen, Sendung von Rechnungen und Kontoauszügen, Nachladen von Prepaid-Konten und ähnliche Operationen werden auch von individuellen Zahlungsdienstanbietern 4 (beispielsweise mittels angeschlossener Finanzrechner 5) durchgeführt.

Gemäss den bisherigen Zahlungsverfahren bekommt jeder Benutzer eine physische Karte, um seine Affiliation an einen Zahlungsdienst vor einer Geldtransaktion zu beweisen. Jedes Geldkonto wird dann an eine andere Karte gebunden. Will ein Benutzer für seine verschiedenen Zahlungszwecke mehrere Debit-, Kredit-, und/oder Wertkarten affiliieren, muss er mehrere Zahlungskarten mitführen und für jede Zahlungstransaktion die passende auswählen, was sich als unpraktisch und sicherheitsproblematisch erweist.

In einer bevorzugten Ausführungsform werden mehrere Geldkonten, die mehreren Zahlungsdiensten von mehreren Zahlungsdienstanbietern 4 entsprechen können, an ein gemeinsames Identifizierungsmodul 10 gebunden. In einer bevorzugten Variante dient die SIM-Karte 10, die zur Identifizierung des Benutzers 1 in einem Mobilfunknetz bestimmt ist, als multifunktionelle Zahlungskarte, die an mehrere Geldkonten gebunden ist. Die Affiliation an mehreren Zahlungsdienste wird somit mit dem Besitz einer einzigen Chipkarte bewiesen.

Umgekehrt kann auch ein einzelnes Geldkonto an mehrere Identifizierungsmodule gebunden sein. Dies erlaubt zum Beispiel, dass in einer Familie oder in einem Unternehmen jedes Mitglied über sein eigenes Identifizierungsmodul verfügt, um auf ein gemeinsames Geldkonto zuzugreifen.

Das Identifizierungsmodul 10 enthält einen Speicher von jenen Bereichen die vom Mobilfunkbetreiber den Zahlungsdienstanbietern zum Ablegen der benötigten Daten zur Verfügung gestellt werden. Jeder Zahlungsdienstanbieter verwendet somit einen vorbestimmten Speicherbereich der SIM-Karten der affiliierten Benutzer, in welchem er Daten (beispielsweise Kartennummer, Geldbeträge, Spendegrenze, Transaktions-Logfiles, temporäre oder permanente dienstabhängige Daten und Programmen, usw.) ablegen kann. In einer anderen bevorzugten Variante der Erfindung werden diese Daten (oder ein Teil dieser Daten) in einer Zahlungsplattform 31 in der Infrastruktur des Mobilfunknetzes abgelegt. Die verschiedenen Geldkonten, an welche eine Identifizierungskarte 10 gebunden ist, werden somit in einem virtuellen Wallet 100 in der Plattform 3 zusammengeführt. Ein logischer Link zwischen einer physischen Karte 10 und dem entsprechenden Wallet 100 von Geldkonten affilierter Zahlungsdienste kann beispielsweise über die Kartennummer IMSI (International Mobile Subscriber Identity) die MSISDN (Mobile Subscriber ISDN Number) und/oder die ICCID (Integrated Circuit Identification) erfolgen.

Mindestens gewisse Geldkonten haben eine feste oder variable Ausgabenlimite. Geldkonten, die an einen Kreditkarten-Zahlungsdienst gebunden sind, haben meistens eine periodische Ausgabenlimite und oft auch eine Ausgabelimite für jede einzelne Zahlungstransaktion. Geldkonten für Debitkarten haben oft auch eine periodische Ausgabenlimite; ausserdem darf der verfügbare Saldo nicht negativ sein oder nicht unter eine vorbestimmte Kreditgrenze gelangen. Bei den meisten Wertkarten entspricht die Ausgabenlimite dem verfügbaren Saldo. Für Module, die an mehrere Geldkonten und/oder mehrere Zahlungsdienste gebunden sind, können ausserdem kollektive Ausgabenlimiten vorgesehen werden. Auf ähnliche Weise können alle Dienste und Geldkonten eines Anbieters 2 in einem Wallet 200 in der Zahlungsplattform 3 zusammengeführt werden, wobei ein logischer Link zwischen einem Anbieter 2 und dem entsprechenden Wallet 200 über eine Anbieter-Identifizierung erfolgen kann.

Das erfindungsgemässe System umfasst ausserdem vorzugsweise ein automatisches Bestimmungsmodul, um das ideale Paar von Geldkonten, welches vom Mobilteilnehmer-Identifizierungsmodul und von dem Anbieter-Zahlungsterminal für eine Zahlungstransaktion verwendet wird, automatisch zu bestimmen.

Die Infrastruktur des Mobilfunknetzes 3 umfasst ausserdem vorzugsweise ein Standortbestimmungsmodul 300, um den Standort des Benutzers zu bestimmen. Dieser Standort kann die Zelle des Mobilfunknetzes sein, in welcher sich der Benutzer momentan befindet, oder vorzugsweise mit einer besseren Genauigkeit anhand von Triangulationsverfahren aus Signalen von mehreren Antennen und/oder mit Satelliten-Standortbestimmungsmitteln ermittelt werden. Der ermittelte Standort kann verwendet werden, um Geldkonten in bestimmten Bereichen zu sperren oder zuzulassen.

Ein Cryptoserver 32 ist in der Infrastruktur 3 vorhanden, um Meldungen mit den Benutzern 1, mit den Anbietern 2 und/oder mit den Zahlungsdienstanbietern 4 zu verschlüsseln beziehungsweise zu entschlüsseln. Der Cryptoserver 32 kann auch verwendet werden, um die Authentizität, die Integrität und den Ursprung der Meldung zu prüfen und gegebenenfalls zu bestätigen.

Mit 33 wird ein Betrugsdetektionsmodul veranschaulicht. Dieses Modul verwendet sowohl Parameter, die innerhalb des Mobilfunknetzes bekannt sind (zum Beispiel der Benutzerstandort und der Anbieterstandort) und transaktionsspezifische Parameter (zum Beispiel die Identität der Transaktionspartner oder den Transaktionsbetrag) um verdächtige Transaktionen oder Karten 10 aufzudecken. In einer nicht dargestellten Variante wird dieses Modul von den Zahlungsdienstanbietern (statt vom Mobilfunknetzbetreiber) betrieben.

Das Element 34 ist eine Datenbank, in welcher die Geschäftsbedingungen der verschiedenen Zahlungsdienstanbieter abgelegt sind. Mittel sind vorgesehen, um sicherzustellen, dass diese Bedingungen von den Benutzern akzeptiert sind, bevor ein Geldkonto freigeschaltet wird.

Ein proaktives Nachlademodul 311 wird zur Nachladung der verschiedenen Geldkonten (manuell oder automatisch initiiert von verschiedenen Parametern) verwendet. Erfindungsgemäss werden mit diesem Modul auch Zahlungstransaktionen ermöglicht, für welche die Ausgabenlimite des Mobilteilnehmers nicht ausreicht. Das Modul kann beispielsweise Geldbeträge von einem oder verschiedenen angegliederten Mobilteilnehmern 1 überweisen lassen und/oder die Ausgabenlimite mit der Garantie oder Bewilligung eines oder mehreren anderen Mobilteilnehmern erhöhen. Zu diesem Zweck enthält das Modul 311 eine Datenbank 3110 von hierarchisch angegliederten Mobilteilnehmern, wie weiter unten mit Bezug auf Figur 3 näher beschrieben wird.

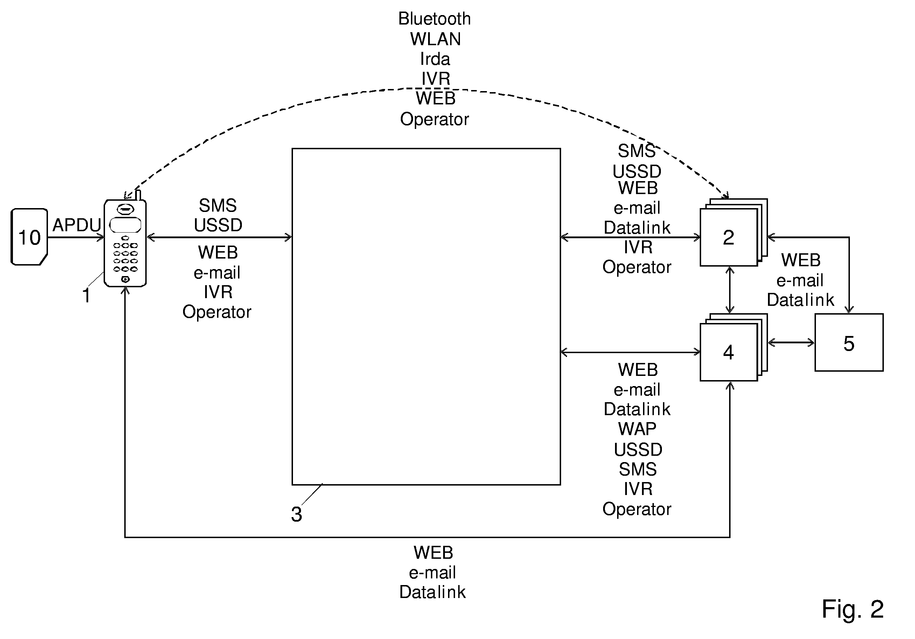

Die Figur 2 zeigt die möglichen Datenkanäle, die für eine Zahlungstransaktion zwischen den verschiedenen Aktoren des Systems verwendet werden können.

Das Identifizierungsmodul 10 wird typischerweise als ISO-Chipkarte im Mobilgerät 1 untergebracht und kommuniziert über APDU-Befehle mit diesem Mobilgerät. Das Mobilgerät ist beispielsweise ein GSM-Mobilgerät und kann somit über SMS (Short Message System) oder USSD (Unstructured Supplementary Service Data) oder über geroutete Datenpakete, Meldungen mit der Plattform 3 austauschen. Als Variante können Daten auch über Internet (zum Beispiel mit einem WEB oder WAP-Browser oder per E-Mail) zwischen dem Mobilgerät 1 und der Plattform 3 übertragen werden. In einer Variante verfügt die Plattform 3 über eine IVR-Schnittstelle (Interactive Voice Response) mit welcher über den Sprachkanal auch Sprachbefehle übertragen werden können. In einer anderen Variante können Daten auch über einen menschlichen Operator (zum Beispiel in einem Call Center) kommuniziert werden. In noch einer anderen Variante werden Daten über eine kontaktlose Schnittstelle (zum Beispiel eine WLAN oder Bluetooth-Schnittstelle) an die Plattform 3 gesendet.

Auf ähnliche Weise können Anbieter 2 ebenfalls über SMS, USSD, E-Mail, WEB, WAP, über einen IVR und/oder über einen menschlichen Operator, Daten mit der Zahlungsplattform 3 austauschen. Andere Datenverbindungen (zum Beispiel über geroutete Datenpakete oder über einen anderen Datenkanal) können im Rahmen der Erfindung auch vorgesehen werden.

Je nach Zahlungsablauf kann auch eine direkte Verbindung zwischen dem Benutzer 1 und dem Anbieter 2 aufgebaut werden, beispielsweise über Bluetooth, WLAN, WEB (zum Beispiel über eine Transaktionsreferenz), IVR, über einen menschlichen Operator oder über eine infrarote Schnittstelle, oder indem die SIM-Karte oder die gesamte Mobilstation galvanisch mit einem Terminal des Anbieters verbunden wird. Auf diese Weise können zumindest ein Teil der Zahlungsdaten schnell und kostenlos direkt übertragen werden.

Zahlungsdienstanbieter 4 brauchen keine Mobilität und werden somit vorzugsweise über einen festen Datenlink (zum Beispiel über WEB, E-Mail, geroutete Datenpakete, oder über einen anderen Datenlink) mit der Plattform 3, mit den Benutzern 1, (wenn nötig) mit den Anbietern 2 und gegebenenfalls mit den Finanzservern 5 verbunden. Die Verbindung zwischen der Zahlungsplattform 31 und den Zahlungsdienstanbietern 4 ist vorzugsweise gesichert (zum Beispiel über ein virtuelles privates Netzwerk). Zahlungsdaten zwischen der Zahlungsplattform 31 und den Zahlungsdienstanbietern können auch in Daten, die mehrere Zahlungstransaktionen betreffen, gesendet werden. Verbindungen mit den Benutzern 1 und mit den Anbietern 2 können auch über Fax oder Post vorgesehen werden.

Wie bereits erwähnt können sowohl Benutzer 1 als auch Anbieter 2 an mehrere Zahlungsdienste mehrerer Zahlungsdienstanbieter affiliiert werden. Dementsprechend können Identifizierungsmodule 10 und Terminals der Anbieter an mehrere Geldkonten 100 beziehungsweise 200 gebunden werden. Will ein Benutzer 1 eine Zahlungstransaktion mit einem Anbieter 2 ausführen, muss vorerst entschieden werden, mit welchem Zahlungsdienst die Transaktion durchgeführt wird. Beispielsweise muss entschieden werden, ob die Transaktion mit einem Kreditkarten- Debitkartenoder Wertkarten-Zahlungsdienst durchgeführt wird und mit welchem Anbieter dieses Typs von Diensten.

Diese Entscheidung wird vorzugsweise automatisch vom Bestimmungsmodul 310 getroffen. In der dargestellten bevorzugten Ausführungsform befindet sich dieses Modul in der Zahlungsplattform 31 und wird somit vom Betreiber des Mobilfunknetzes betrieben. Dies hat den Vorteil, dass dieser Betreiber gegenüber den verschiedenen Zahlungsdienstanbietern neutral sein kann und dass kein Anbieter bevorzugt wird. Ausserdem kann das Modul 310 Parameter verwenden, die innerhalb der Infrastruktur des Netzes bestimmt und bekannt sind.

Das Bestimmungsmodul besteht vorzugsweise aus einem Software und/oder Hardware-Modul, beispielsweise aus einer Software-Anwendung, die von einem Server in der Infrastruktur 3 des Mobilfunknetzes ausgeführt wird. Der Server kann über verschiedene Datenkanäle mit den Mobilgeräten 1, mit den Terminals der Anbieter 2 und mit den Zahlungsdienstanbietern 4 kommunizieren.

Die Entscheidung, ein bestimmtes Geldkonto für eine bestimmte Zahlungstransaktion zu verwenden, kann zum Beispiel von folgenden Parametern abhängig sein: Transaktionsbetrag, Bonuspunkte, vorbestimmte Mobilteilnehmerpräferenzen, Sicherheitsfaktoren, Anonymität, Standort des Benutzers, Identität des Mobilfunknetzes in welchem der Mobilteilnehmer angemeldet ist, Wechselkurs mit den verschiedenen Geldkonten, Gebühren bei der Verwendung der verschiedenen Geldkonten, Zinsen, verfügbarer Saldo, periodische Kredit- oder Debitgrenzen, Zeit, Datum und/oder Wochentag, Logfile früherer Transaktionen, verwendetes Mobilgerät oder Mobilgerättyp, weisse beziehungsweise schwarze oder graue Liste von Anbietern und/oder Mobilteilnehmern, usw.

Andere Parameter und Prioritäten können von den Anbietern 2 und/oder von den Zahlungsdienstanbietern vorgesehen werden.

Aus Datenschutzgründen werden Zahlungstransaktionsdaten vorzugsweise transparent durch das Mobilfunknetz übertragen; der Betreiber der Zahlungsplattform 3 hat in diesem Fall keine Möglichkeit, auf die Zahlungsdaten der unterschiedlichen Benutzer oder Anbieter zuzugreifen. In einer Variante werden mindestens gewisse Zahlungstransaktionsdaten, die für mindestens gewisse Zahlungsdienstanbieter bestimmt sind, vorzugsweise mit Zustimmung der Benutzer oder Anbieter der Zahlungsplattform zugänglich gemacht. Dies hat den Vorteil, dass die Zahlungsplattform mit den Zahlungsdaten verschiedener Benutzer, Anbieter und Zahlungsdienstanbieter zusätzliche Mehrwertdienste anbieten kann, einschliesslich:
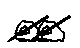 Sendung von konsolidierten Rechnungen an Benutzer und konsolidierten Gutschriften an Anbieter, in welchen Transaktionen, die über mehrere Zahlungsdienstanbieter durchgeführt wurden, zusammengefasst sind.
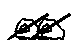 Bestimmung von konsolidierten Kredit- und/oder Debitgrenzen, um einen maximalen Ausgabebetrag pro Zeitspanne über mehrere Geldkonten festzulegen. Dies erlaubt eine höhere Sicherheit für den Benutzer, für die Anbieter und für die Zahlungsdienstanbieter, da die Gesamtausgaben mit allen Geldkonten eines Identifizierungsmoduls begrenzt sind.
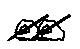 Detektion von Betrügen durch Überwachung des Verhaltens des Benutzers mit mehreren Geldkonten. Dieses Merkmal wird weiter unten ausführlicher beschrieben.
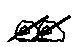 Geldtransaktionen zwischen mehreren Geldkonten, die an ein gemeinsames Identifizierungsmodul gebunden sind. Dies erlaubt zum Beispiel, ein Wert- oder Debitkonto aus einem anderen Geldkonto nachzuladen, zum Beispiel automatisch, wenn gewisse Kriterien erfüllt sind.
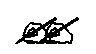 Ermittlung von Statistiken und Berichten über die Verwendung der verschiedenen Geldkonten. Dies erlaubt unter anderem Zahlungsdienstanbietern, Werbekampagnen und Angebote besser an die Bedürfnisse der Benutzer anzupassen.
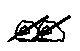 Gleichzeitige Sperrung beziehungsweise Entsperrung aller Geldkonten (die an ein gestohlenes oder verlorenes Identifizierungsmodul gebunden sind) durch den Betreiber oder durch den Benutzer.
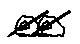 Bonuspunktesammlungsprogramme über mehrere Geldkonten mehrerer Zahlungsdienstanbieter.
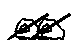 Direkte Transaktionen zwischen Geldkonten eines oder mehrerer Benutzer, ohne dass Transaktionsdaten an externe Zahlungsdienstanbieter gesendet werden. Dies erlaubt zum Beispiel, ein Prepaid-Konto eines Benutzers für die Verwendung des Mobilnetzwerkes mit einem anderen Geldkonto eines anderen Benutzers nachzuladen.
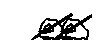 Verwendung von Benutzerparametern (Namen, Adresse, Solvenz, usw.), die für einen bestimmten Zahlungsdienst eingegeben wurden, für einen anderen, später affiliierten Zahlungsdienst eines anderen Zahlungsdienstanbieters.

In einer bevorzugten Variante werden Zahlungstransaktionsdaten anonymisiert, bevor sie der Zahlungsplattform zugänglich gemacht werden. Zu diesem Zweck wird die Benutzeridentifikation, die mit bestimmten Zahlungstransaktionsdaten verknüpft ist, in einem Anonymizer durch ein für den Netzbetreiber ungenügend kennzeichnendes Alias ersetzt. Auf diese Weise können anonyme Zahlungsdaten in der Zahlungsplattform gesammelt, verwendet und statistisch bewertet werden, ohne Datenschutzgesetze zu verletzen.

Zur Detektion von Betrügen werden vorzugsweise sowohl Parameter des Mobilfunknetzes 3 als auch Parameter des oder der Zahlungsdienstanbieter 4 verwendet. Im dargestellten Beispiel werden Betrüge von einem Betrugsdetektionsmodul 33 (zu Beispiel ein Server mit geeigneten Software-Anwendungen) in der Infrastruktur des Mobilfunknetzes 3 ermittelt. Dieser Modul 33 erhält Parameter des Mobilfunknetzes (das heisst Parameter, die innerhalb des Netzes ermittelt werden) direkt von der Zahlungsplattform 31 und/oder von anderen Hardware- und Software Komponenten der Netzwerkinfrastruktur. Parameter der Zahlungsdienstanbieter werden vorzugsweise über den entsprechenden Datenlink aus den Servern 4 der Zahlungsdienstanbieter herausgeholt. Alternativ können mindestens gewisse Zahlungsdienstanbieter-Parameter aus den durch die Zahlungsplattform 31 übertragenen Zahlungstransaktionsdaten ermittelt werden; in diesem Fall können aus Datenschutzgründen mindestens gewisse Transaktionsdaten anonymisiert sein.

Da die Zahlungsplattform 31 und das Betrugsdetektionsmodul 33 in dieser Variante zentralisiert sind, können Parameter von verschiedenen Zahlungsdienstanbietern 4 kombiniert werden, um dubiose Verhaltensweisen zu ermitteln. Beispielsweise können Zahlungstransaktionsdaten mit einem Kreditkartendienstanbieter und mit einem Debitkartendienstanbieter zusammen gewertet werden, um zu bestimmen, ob das Benutzerverhalten verdächtig ist. Wird ein Betrug oder Betrugsversuch mit einem Zahlungsdienstanbieter aufgedeckt, können alle Geldkonten, die an die betroffene Karte gebunden sind, gleichzeitig gesperrt werden.

Die Figur 3 zeigt schematisch ein Beispiel einer möglichen Struktur der Angliederung von Mobilteilnehmern 1 innerhalb einer Gruppe. Diese Struktur wird in der bereits erwähnten Datenbank 3110 abgelegt. Im dargestellten Beispiel umfasst die Gruppe fünf Mobilteilnehmer 400, 401, 402, 403 und 404. Jeder Pfeil zeigt ein Glied zwischen zwei Mobilteilnehmer in der Gruppe. Ein erster Mobilteilnehmer (das Kind) ist einem zweiten Mobilteilnehmer (Eltern) angegliedert, wenn er bei Bedarf (zum Beispiel wenn seine Ausgabenlimite für eine gewisse Zahlungstransaktion nicht ausreicht) Geldkonten dieses zweiten Mobilteilnehmers belasten darf, oder wenn die Eltern die Ausgabenlimite des Kindes ändern dürfen und können, oder ganz allgemein wenn eine Benutzungseinschränkung für ein bestimmtes Geldkonto des Kindes dank eines Elterns überwunden weren kann . Im dargestellten Beispiel sind die beiden Kinder-Mobilteilnehmer 401 und 402 dem Eltern-Mobilteilnehmer 400 angegliedert. Mobilteilnehmer 404 ist den zwei Mobilteilnehmern 401 und 402 angegliedert. Mobilteilnehmer 402 und 403 sind gegenseitig miteinander verbunden; jeder darf Geldkonten des anderen (gemäss gewissen Kriterien) belasten und/oder die Ausgabenlimite des anderen erhöhen. In der Folge der Beschreibung wird ein Mobilteilnehmer, dessen Geldkonto durch einen anderen angegliederten Mobilteilnehmer belastet werden darf "Eltern" genannt, während der belastende Mobilteilnehmer als "Kind" bezeichnet wird.

In der Datenbank 3110 abgelegte Kriterien 500 bis 505 definieren für jedes Glied, ob, wie und mit welchen Einschränkungen Ausgabenlimiten oder andere Benutzungseinschränkungen überschritten werden dürfen. Folgende Kriterien können beispielsweise definiert werden:
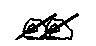 Bei Überschreitung der Ausgabenlimite darf Geld aus einem Elternkonto überwiesen werden.
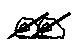 Die Ausgabenlimite darf erhöht werden.
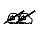 Bei Überschreitung der Ausgabenlimite darf das Geldkonto mit der Akzeptanz eines Elterns aus einem dritten Gelkonten nachgeladen werden.
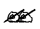 Geldüberweisungen und/oder Änderung der Ausgabenlimite mit oder ohne ausdrückliche Genehmigung der Eltern. Die Genehmigung wird beispielsweise gegeben, indem ein Kind eine Überschreitungsanfragemeldung an Eltern automatisch oder manuell senden und indem Eltern diese Meldung positiv beantworten. Die Überschreitungsanfragemeldung kann automatisch von einem Software-Modul im Identifizierungsmodul des Kinds oder vorzugsweise in der Zahlungsplattform 31 vorbereitet werden; bevor sie gesendet wird, wird sie vorzugsweise vom Kind validiert. Auf diese Weise kann sichergestellt werden, dass ein Kind seine Eltern nur absichtlich und bewusst ersucht. Die Genehmigungsantwort der Eltern kann manuell oder automatisch gemäss vordefinierten Kriterien vorbereitet werden.
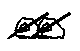 Bevorzugter Datenkanal für die Überschreitungsanfragemeldung und für deren Antwort (zum Beispiel SMS, USSD, Sprachkanal, usw.)
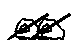 Maximaler Betrag, der durch ein angegliedertes Kind für eine gewisse Zahlungstransaktion und/oder während einer vorbestimmten Zeitspanne, aus einem Geldkonto der Eltern belastet werden darf. Der Betrag kann auch vom verfügbaren Saldo und/oder von anderen Kriterien abhängen.
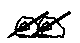 Maximale Erhöhung der Kindausgabenlimite.
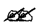 Autorisierte Anbieter. Eltern könnten somit Geldüberweisungen und/oder Ausgabenlimitenänderungen nur für Transaktionen mit einer Liste von vorbestimmten Anbietern 2 genehmigen. Umgekehrt könnten Eltern gewisse Anbieter 2 ausdrücklich sperren.
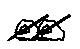 Standort der Kinder, wie er vom Standortbestimmungsmodul 300 ermittelt wird. Eltern könnten bestimmen, dass ihre angegliederten Kinder ihre Ausgabelimite erst dann überschreiten dürfen, wenn diese sich in einem vorbestimmten geographischen Gebiet (zum Beispiel innerhalb eines Unternehmensgeländes, im Inland, usw.) befinden. Umgekehrt können Eltern solche Überweisungen sperren, wenn die Kinder sich in einem bestimmten Gebiet (zum Beispiel im Ausland) befinden.
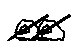 Zeit, Datum und Wochentag.
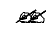 Vorbestimmte Mobilteilnehmerpräferenzen. Eltern können bestimmen, dass einem Kind nicht alle Geldkonten zur Verfügung gestellt werden.
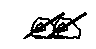 Sicherheitsfaktoren, die mit der Verwendung jedes Geldkontos für die Eltern und/oder für das Kind vorhanden sind.
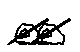 Identität des Mobilfunknetzes, in welchem das Kind und/oder die Eltern angemeldet sind. Eltern könnten zum Beispiel verhindern, dass deren Geldkonto durch die Kinder belastet wird, wenn sie sich selbst im Ausland befinden, wo die Nachlademöglichkeiten eingeschränkt sind.
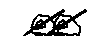 Verfügbarer Kommunikationskanal zwischen dem Anbieter-Zahlungsterminal 2 und dem Mobilgerät des Kindes 1.
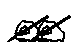 Periodische Kredit- oder Debitgrenzen für die verschiedenen Geldkonten der Eltern.
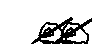 Verfügbarer Saldo auf den Geldkonten der Eltern.
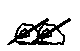 Verlangte Passwörter und/oder biometrische Schlüssel, mit welchem das Kind sich authentifizieren muss, bevor Geld überwiesen wird.
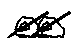 usw.

Wenn das Identifizierungsmodul der Eltern an mehrere Geldkonten gebunden ist, können die Eltern in einer bevorzugten Ausführungsform eine Prioritätenliste bestimmen, die angibt, in welcher Reihenfolge und/oder gemäss welchen Kriterien die verschiedenen Geldkonten belastet werden sollen.Mobilteilnehmer können sich vorzugsweise über verschiedene Mittel aneinander angliedern. In einer Variante wird die Registrierung in eine Gruppe von angegliederten Mitgliedern am Schalter oder mit einem von den Eltern unterzeichneten und an den Betreiber der Zahlungsplattform gesendeten Vertrag getätigt. Dieser Vertrag kann beispielsweise ein Teil des Anmeldevertrages im Mobilfunknetz sein, oder des Vertrags mit einem Zahlungsdienstanbieter. In einer bevorzugten Variante können sich Mobilteilnehmer dynamisch aneinander angliedern (beispielsweise über eine WEB- oder WAP-Seite, mit SMS, USSD, usw.). Elektronische Unterschriften oder andere Sicherheitsmechanismen werden dann vorgesehen, um die Identität der Partner prüfen zu können.

Da die Datenbank 3110 von hierarchisch angegliederten Mobilteilnehmern in der zentralen Zahlungsplattform 31 vorgesehen ist, können bei Überschreitungen der Ausgabenlimite Geldbeträge unabhängig vom Zahlungsdienst zwischen angegliederten Mobilteilnehmern überwiesen werden. Beispielsweise kann ein Kreditkartenkonto eines Elternteils belastet werden, um ein Wertkonto eines Kinds bei einem anderen Zahlungsdienstanbieter nachzuladen.

Überweisung von Geldbeträgen von angegliederten Eltern, und/oder Erhöhungen der Ausgabenlimiten, können von den angefragten Eltern, aber auch vom Betreiber der Zahlungsplattform und/oder vom Zahlungsdienstanbieter des angegliederten Geldkontos abgelehnt werden. Dies kann beispielsweise dann der Fall sein, wenn die Ausgabelimite der Eltern selbst überschritten wird. Deshalb können Kinder mehrere angegliederte Eltern haben, aus deren Konten bei Bedarf Geldbeträge überwiesen werden können und/oder die die Ausgabenlimite erhöhen dürfen. Die Angliederungskriterien 500 bis 505 definieren vorzugsweise, wie die benötigten Geldbeträge beziehungsweise Limitenerhöhungen zwischen den potentiellen Eltern aufgeteilt sind. Die einstellbaren Möglichkeiten umfassen beispielsweise:
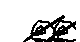 Vordefinierte Prioritätsliste. In diesem Fall werden Überschreitungsanfragemeldung in einer vorbestimmten Reihenfolge an die verschiedenen Eltern geschickt, bis der benötigte Geldbetrag zusammengesammelt ist.
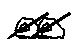 Gleichzeitige Sendung einer Überschreitungsanfragemeldung an alle Eltern. Sobald der benötigte Betrag bei einem oder mehreren Eltern zusammengesammelt ist, werden die Eltern die noch nicht geantwortet haben automatisch informiert.
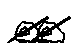 Gleichzeitige Sendung einer Überschreitungsanfragemeldung an alle Eltern, wobei der benötigte Betrag zwischen den Eltern aufgeteilt wird. Reicht die zusammengesammelte Summe für die Zahlungstransaktion nicht aus, kann eine zweite Überschreitungsanfragemeldung an die Eltern gesendet werden.
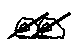 Manuelle Auswahl durch das Kind jener Eltern, die anzufragen sind.
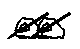 Automatische Auswahl gemäss vorbestimmten Kriterien (Geldbetrag, Anbieter, usw.) der Eltern, die anzufragen sind.
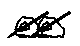 Usw.

Unterschiedliche Kriterien können für unterschiedliche an eine Identifizierungskarte gebundene Geldkonten definiert werden.

Als Spezialfall kann ein Mobilteilnehmer sein eigener Eltern sein, der Ausgabenlimite für ein bestimmtes Geldkonto anhand eines anderen Geldkontos des selben oder eines anderen Identifizierungsmoduls überschreiten lassen darf. Ein Mobilteilnehmer könnte beispielsweise eine Kreditlimite für ein Kreditkartenkonto, das an sein Identifizierungsmodul gebunden ist, mit dem verfügbaren Saldo auf einem Debitkonto des selben Identifizierungsmoduls garantieren und dynamisch bei Bedarf anpassen lassen. Das erfindungsgemässe Verfahren bzw. System kann unter anderem verwendet werden, um Geldtransaktionen von Benutzer zu Benutzer (P-to-P) durchzuführen.

Die Benutzungseinschränkung jedes Geldkontos kann fix sein, oder sie kann von unterschiedlichen Parametern abhängig sein, zum Beispiel von Anbieter, vom Zahlungsdienstanbieter, vom Standort des Benutzers, usw. Diese Einschränkung kann vom Zahlungsdienstanbieter und/oder von den Eltern festgelegt werden

## Patentansprüche

1. Zahlungsverfahren zwischen einem Mobilteilnehmer (1) und einem Anbieter (2) ,
wobei der Mobilteilnehmer über ein erstes tragbares persönliches Identifizierungsmodul (10) verfügt, das zur Identifizierung in einem Mobilfunknetz (3) bestimmt ist,
wobei das benannte Identifizierungsmodul an mindestens ein Geldkonto (100) gebunden ist,
wobei die Benutzung mindestens eines benannten Geldkontos eingeschränkt ist,
**dadurch gekennzeichnet, dass** eine Zahlungstransaktion, für die die Benutzungseinschränkung nicht ausreicht, mittels eines zweiten angegliederten Geldkontos, das an mindestens ein zweites Identifizierungsmodul gebunden ist, erfolgt.

2. Zahlungsverfahren gemäss Anspruch 1, in welchem die benannte Benutzungseinschränkung eine Ausgabenlimite ist.

3. Zahlungsverfahren gemäss einem der Ansprüche 1 bis 2, in welchem der benötigte Geldbetrag dem benannten zweiten angegliederten Geldkonto belastet wird.

4. Zahlungsverfahren gemäss Anspruch 1, in welchem die benannte Benutzungseinschränkung abhängig vom benannten zweiten angegliederten Geldkonto während der Zahlungstransaktion geändert wird.

5. Zahlungsverfahren gemäss einem der Ansprüche 1 bis 4, in welchem die benannte Benutzungseinschränkung vom benannten zweites Identifizierungsmodul beziehungsweise vom Inhaber des benannten zweiten Identifizierungsmoduls geändert wird.

6. Zahlungsverfahren gemäss einem der Ansprüche 2 bis 5, mit folgenden Schritten, die durchgeführt werden, bevor die Zahlungstransaktion erfolgt:
Sendung einer Ausgabenlimite-Überschreitungsanfragemeldung an den Inhaber des benannten zweiten Geldkontos,
Bewilligung der benannten Überschreitungsanfragemeldung durch den Inhaber des benannten zweiten Geldkontos.

7. Zahlungsverfahren gemäss Anspruch 6, in welchem die benannte Überschreitungsanfragemeldung über SMS gesendet wird und in welchem die benannte Überschreitungsanfragemeldung durch Beantwortung des benannten SMS akzeptiert wird.

8. Zahlungsverfahren gemäss Anspruch 6, in welchem die benannte Überschreitungsanfragemeldung über USSD gesendet wird und in welchem die benannte Überschreitungsanfragemeldung durch Beantwortung des benannten USSD akzeptiert wird.

9. Zahlungsverfahren gemäss Anspruch 6, in welchem die benannte Überschreitungsanfragemeldung über ein IVR akzeptiert wird.

10. Zahlungsverfahren gemäss einem der Ansprüche 6 bis 9, in welchem die Sendung der benannten Überschreitungsanfragemeldung automatisch vorgeschlagen und vom benannten Mobilteilnehmer validiert wird.

11. Zahlungsverfahren gemäss einem der Ansprüche 6 bis 10, in welchem die benannte Überschreitungsanfragemeldung manuell vom Inhaber des benannten zweiten Geldkontos bewilligt wird.

12. Zahlungsverfahren gemäss einem der Ansprüche 6 bis 10, in welchem die benannte Überschreitungsanfragemeldung automatisch gemäss vorbestimmten Kriterien akzeptiert wird.

13. Zahlungsverfahren gemäss Anspruch 12, in welchem die benannten vorbestimmten Kriterien vom benannten Inhaber des benannten zweiten Geldkontos bestimmt werden.

14. Zahlungsverfahren gemäss einem der Ansprüche 12 oder 13, in welchem die benannten Kriterien eine Liste von autorisierten und/oder gesperrten Anbietern umfassen.

15. Zahlungsverfahren gemäss einem der Ansprüche 12 bis 14, in welchem die benannten Kriterien einen maximalen Betrag umfassen.

16. Zahlungsverfahren gemäss einem der Ansprüche 12 bis 15, in welchem die benannten Kriterien autorisierte und/oder gesperrte Übertragungskanäle für die Übermittlung der Zahlungstransaktionsdaten umfassen.

17. Zahlungsverfahren gemäss einem der Ansprüche 12 bis 16, in welchem die benannten Kriterien vorbestimmte Benutzerstandorte umfassen.

18. Zahlungsverfahren gemäss einem der Ansprüche 12 bis 17, in welchem die benannten Kriterien vorbestimmte Zeiten und/oder Wochentage umfassen.

19. Zahlungsverfahren gemäss einem der Ansprüche 12 bis 18, in welchem unterschiedliche Kriterien für unterschiedliche an die benannte Identifizierungskarte gebundene Geldkonten definiert sind.

20. Zahlungsverfahren gemäss einem der Ansprüche 2 bis 19, in welchem Geldbeträge aus einem dritten Geldkonto, das an mindestens ein drittes Identifizierungsmodul gebunden ist, überwiesen werden, wenn die Ausgabenlimite des benannten zweiten Geldkonto für die benannte gewisse Zahlungstransaktion nicht ausreicht.

21. Zahlungsverfahren gemäss einem der Ansprüche 2 bis 20, in welchem eine Liste von angegliederten Identifizierungsmodulen, zwischen welchen Geldbeträge überwiesen werden können, wenn die an ein Identifizierungsmodul gebundene Ausgabenlimite für eine gewisse Zahlungstransaktion nicht ausreicht, in einer zentralen Datenbank abgelegt ist.

22. Zahlungsverfahren gemäss einem der Ansprüche 1 bis 21, in welchem die benannten Angliederungen und/oder Überweisungskriterien von den benannten Mobilteilnehmern über WEB, WAP, SMS und/oder USSD definiert werden.

23. Zahlungsverfahren gemäss einem der Ansprüche 2 bis 22, in welchem Geldbeträge aus einer Vielzahl von Geldkonten, die an eine Vielzahl von an Identifizierungsmodule angegliederten Mobilteilnehmer in einer Gruppe gebunden sind, überwiesen werden, wenn die benannte Ausgabenlimite für eine gewisse Zahlungstransaktion nicht ausreicht.

24. Zahlungsverfahren gemäss einem der Ansprüche 1 bis 23, in welchem das benannte Identifizierungsmodul an mehrere Geldkonten (100) gebunden ist
wobei der benannte Anbieter an mehrere Geldkonten (200) gebunden ist,
und in welchem das Paar von Geldkonten das für eine Zahlungstransaktion verwendet wird automatisch bestimmt wird.

25. Zahlungsverfahren gemäss einem der Ansprüche 2 bis 24, in welchem die benannte Ausgabenlimite dem maximalen Betrag, der aus einem bestimmten Geldkonto während einer bestimmten Zeitspanne ausgegeben werden darf, entspricht.

26. Zahlungsverfahren gemäss einem der Ansprüche 2 bis 25, in welchem die benannte Ausgabenlimite dem verfügbaren Saldo auf einem Geldkonto entspricht.

27. Zahlungsverfahren gemäss einem der Ansprüche 2 bis 25, in welchem die benannte Ausgabenlimite einen maximalen Ausgabebetrag für jede Transaktion entspricht.

28. Zahlungsverfahren gemäss einem der Ansprüche 1 bis 27, in welchem die Benutzungseinschränkung vom Anbieter abhängig ist.

29. Zahlungsverfahren gemäss einem der Ansprüche 1 bis 28, in welchem die Benutzungseinschränkung vom Standort des Benutzers abhängig ist.

30. Zahlungssystem mit folgenden Merkmalen:
eine Vielzahl von Anbietern (2) mit Anbieterzahlungsterminals,
eine Vielzahl von Mobilteilnehmern (1) mit Mobilgeräten und Identifizierungsmodulen (10), die zur Identifizierung der Mobilteilnehmer (1) in einem Mobilfunknetz (3) bestimmt sind,
wobei die Mobilteilnehmer-Identifizierungsmodule mit den benannten Anbieterzahlungsmodulen kooperieren können, um Zahlungstransaktionen zwischen Geldkonten der Mobilteilnehmer (100) und Geldkonten der Anbieter (200) durchzuführen,
**gekennzeichnet durch** ein Modul (311), um Zahlungstransaktion, die wegen einer Geldkontobenutzungseinschränkung nicht autorisiert sind, mittels eines zweiten angegliederten Geldkontos das an mindestens ein zweites Identifizierungsmodul gebunden ist, zu ermöglichen.

31. Zahlungssystem gemäss Anspruch 30, mit einer Datenbank (3110) von aneinander angegliederten Mobilteilnehmern.
